# FASCICULE DE BREVET EUROPEEN

(11) **EP 1 383 617 B1**
(45) Date de publication et mention de la délivrance du brevet: **28.06.2017**
(21) Numéro de dépôt: 02730377.5
(22) Date de dépôt: 30.04.2002
(51) Int. Cl.: B21B 1/16

(54) **PROCEDE DE FABRICATION D'UN FIL ELECTRIQUEMENT CONDUCTEUR ET DISPOSITIF POUR LA MISE EN OEUVRE D'UN TEL PROCEDE**
VERFAHREN ZUR HERSTELLUNG EINES ELEKTRISCHLEITENDEN DRAHTES UND VORRICHTUNG ZUM DURCHFÜHREN DES VERFAHRENS
METHOD FOR MAKING AN ELECTRICALLY CONDUCTIVE WIRE AND DEVICE THEREFOR

(30) Priorité: 30.04.2001 FR 0105832
(43) Date de publication de la demande: 28.01.2004
(73) Titulaire: VALEO EQUIPEMENTS ELECTRIQUES MOTEUR, 94017 Créteil (FR)
(72) Inventeur: EVEN, Denis, F-75012 Paris (FR)
(86) Numéro de dépôt international: PCT/FR2002/001501
(87) Numéro de publication internationale: WO 2002/087797

(56) Documents cités:
- CA-A- 2 081 593
- US-A- 2 835 153
- PATENT ABSTRACTS OF JAPAN vol. 015, no. 155 (M-1104), 18 avril 1991 (1991-04-18) & JP 03 027893 A (TANAKA KIKINZOKU KOGYO KK), 6 février 1991 (1991-02-06)
- PATENT ABSTRACTS OF JAPAN vol. 016, no. 132 (M-1229), 3 avril 1992 (1992-04-03) & JP 03 294074 A (KEIICHIRO YOSHIDA), 25 décembre 1991 (1991-12-25)

## Description

### Domaine technique de l'invention

La présente invention concerne un procédé de fabrication d'un fil électriquement conducteur pour bobinage pour machine électrique tournante, ainsi qu'un dispositif pour la mise en oeuvre d'un tel procédé.

Plus particulièrement, l'invention se rapporte à un procédé de fabrication d'un fil électriquement conducteur pourvu de méplats longitudinaux, à partir d'un fil conducteur de section en coupe transversale de forme généralement ronde.

### Etat de la technique

Une des applications d'un tel fil est la réalisation de bobinages pour stator d'alternateur ou d'alterno-démarreur de véhicule automobile, pour rotors de démarreur, pour inducteurs de démarreur ou de transformateur, pour inductances, ...

En effet, pour la réalisation de ce type de bobinage, dans le but d'optimiser la compacité de la machine qui en est pourvue, ou d'améliorer son refroidissement, il est souvent nécessaire d'utiliser un fil conducteur pourvu de méplats, c'est à dire d'un fil conducteur dont la section en coupe transversale est aplatie, par exemple en forme de parallélogramme, notamment rectangulairer (voir par example CA 2 081593 A).

Bien que l'utilisation d'un tel fil soit particulièrement avantageuse pour la réalisation d'un bobinage, elle présente, néanmoins, des inconvénients majeurs.

Tout d'abord, au cours de la fabrication du fil, la vitesse de défilement d'un fil de section rectangulaire dans une machine, en particulier une machine de dépôt d'un revêtement d'émail d'isolation, est nécessairement plus lente que la vitesse de défilement d'un fil de section ronde, ce qui est difficilement compatible avec des chaînes de fabrication à haute cadence.

En outre, dans une telle machine de revêtement, l'émail se dépose difficilement dans les coins du fil conducteur. Il en résulte des différences d'épaisseur d'émail sur la surface du fil.

Pour palier cet inconvénient, on réalise des coins arrondis avec un rayon de courbure minimum de manière à permettre un bon accrochage de la couche d'isolation. Ceci conduit néanmoins à une réduction de la section utile globale du fil.

En effet, pour un fil ayant par exemple une section rectangulaire dont l'épaisseur est de 1,4 mm et dont la largeur est de 2 mm, et dont les rayons de courbure aux angles sont de 0,5 mm, la section globale du fil est de 2,585 mm², ce qui représente une perte de 8% par rapport à un fil dont la section présente des angles droits.

Par ailleurs, l'utilisation d'un fil pourvu de méplats rend l'enroulement et le déroulement du fil relativement difficile à mettre en oeuvre dans la mesure où le fil tend à se vriller s'il n'est pas parfaitement guidé. Le conditionnement doit alors se faire impérativement sur un touret, alors qu'un fil rond peut être aisément enroulé dans un fût et dévidé de celui-ci, sans qu'il soit nécessaire de faire tourner ce fût pendant le dévidage.

L'enroulement et le déroulement d'un fil à méplats sur un touret nécessitent alors un asservissement de la rotation de ce dernier, ce qui n'est pas le cas pour un fût de fil rond.

Il n'est par ailleurs pas facile de disposer sur le marché de tourets de fil méplat de masse supérieure à 80 kg alors que des fûts de fil rond peuvent aisément recevoir plus de 200 ou 300 kg de fils, ce qui diminue en rapport la fréquence des arrêts de production.

On notera enfin que, alors que pour une section donnée de fil rond, il n'existe qu'un seul diamètre, pour une section donnée de fils à méplats, il existe une grande disparité de configurations envisageables, ce qui interdit en pratique tout stock important chez les producteurs et distributeurs de tels fils.

### Objet de l'invention

Le but de l'invention est de palier ces inconvénients.

Elle a donc pour objet un procédé de fabrication d'un fil électriquement conducteur pour bobinage pour machine électrique tournante à partir d'un fil conducteur de section en coupe transversale de forme généralement ronde, caractérisé en ce qu'il comporte les étapes consistant à :
- prélever en continu le fil rond à partir d'un support d'alimentation, et
- appliquer longitudinalement des efforts sur le fil sur des zones diamétralement opposées de manière à former des méplats longitudinaux sur ce dernier,
et en ce que le fil rond étant muni d'une enveloppe électriquement isolante, les efforts sont appliqués sur le fil par l'intermédiaire de ladite enveloppe.

Le procédé selon l'invention permet ainsi d'obtenir avantageusement, à un coût réduit, un fil méplat isolé par une couche, par exemple en émail, ladite couche formant une enveloppe électriquement isolante. En effet, il est beaucoup plus facile et économique de déposer une couche isolante sur un fil rond que sur un fil comportant au moins un méplat ou présentant tout autre forme qu'une section en coupe transversale circulaire.

Ce procédé peut également comporter une ou plusieurs des caractéristiques suivantes, prises isolément selon toutes les combinaisons techniquement possibles :
- postérieurement à l'étape d'application desdits efforts dans la direction de la l'épaisseur du fil, on applique des efforts additionnels, dans la direction de la largeur du fil, sur des zones diamétralement opposées perpendiculaires aux méplats formés, de manière à former un fil de section en coupe transversale généralement rectangulaire.

Un fil de section en coupe transversale généralement rectangulaire et isolé, obtenu selon le procédé de l'invention permet de réaliser économiquement un stator bobiné avec des épingles. Avantageusement, ces épingles comportent deux branches, formant des barres de conducteur, que l'on introduit dans des encoches du stator. Chacune de ces encoches peuvent recevoir au moins deux conducteurs. Avantageusement, on insère, de manière radialement alignés, quatre branches dans chacune des encoches du stator de manière à obtenir par exemple un alternateur hexaphasé. Une section en coupe transversale généralement rectangulaire permet d'optimiser le coefficient de remplissage des encoches.
- on applique des efforts additionnels sur des zones diamétralement opposées du fil dans la direction de la largeur du fil simultanément avec les efforts appliqués longitudinalement dans la direction de l'épaisseur du fil, de manière à former un fil de section en coupe transversale rectangulaire, les méplats (M, M') contigus formant des angles droits.

Ainsi, les fils obtenus présentent une section parfaitement rectangulaire permettant de remplir les encoches d'un stator ou d'un rotor de machine tournante avec un fort coefficient de remplissage.
- lesdites étapes d'application desdits efforts consistent chacune à faire passer le fil entre au moins une paire de rouleaux de laminage ;
- le rapport entre la longueur et la largeur de la section du fil étant inférieur ou égal à deux, lesdites étapes d'application desdits efforts consistent chacune à faire passer le fil entre une seule paire de rouleaux de laminage.

L'invention a également pour objet un dispositif de fabrication d'un fil électriquement conducteur pour bobinage pour machine électrique tournante selon le procédé d'une des revendications précédentes, à partir d'un fil conducteur de section en coupe transversale de forme généralement ronde, caractérisé en ce que ledit fil étant pourvu d'une enveloppe électriquement isolante, le dispositif comporter un fût d'alimentation dans lequel ledit fil est enroulé et au moins une paire de rouleaux de laminage adaptés pour appliquer conjointement des efforts sur ledit fil par l'intermédiaire de ladite enveloppe sur des zones diamétralement opposées de manière à former des méplats sur ce dernier, et des moyens pour faire défiler le fil entre lesdits rouleaux.

Avantageusement, le dispositif comporte au moins deux paires de rouleaux de laminage disposés respectivement en amont et en aval, en considérant le sens de défilement du fil, la paire de rouleaux amont comportant une surface périphérique active concave.

### Description sommaire des dessins

D'autres buts, caractéristiques et avantages de l'invention ressortiront de la description suivante, donnée uniquement à titre d'exemple, et faite en référence aux dessins annexés sur lesquels :
- la figure 1 est une vue schématique d'un dispositif de fabrication d'un fil électriquement conducteur conforme à l'invention ;
- la figure 2 illustre une phase de mise en forme du fil selon le procédé conforme à l'invention ;
- la figure 3 illustre une autre phase de mise en oeuvre selon le procédé conforme à l'invention ;
- la figure 4 illustre un autre exemple de mise en oeuvre de la phase de mise en forme du fil selon le procédé conforme à l'invention ;
- la figure 5 est une vue schématique en direction du déplacement du fil, d'un autre mode de réalisation d'un dispositif de fabrication d'un fil électrique notamment conducteur, selon l'invention;
- la figure 6 est une vue schématique d'un alternateur comportant un stator bobiné avec un fil obtenu selon l'invention;
- la figure 7 est une vue en perspective du stator de la figure 1 avec les éléments conducteurs enlevés pour montrer les encoches du stator,
- la figure 8 est une représentation schématique d'un exemple de branchement des enroulements de phases;
- la figure 9 est une vue en coupe transversale montrant la disposition des éléments conducteurs, obtenus selon l'invention, dans une encoche du stator de la figure 7.

### Descriptions de modes de réalisation préférentiels de l'invention

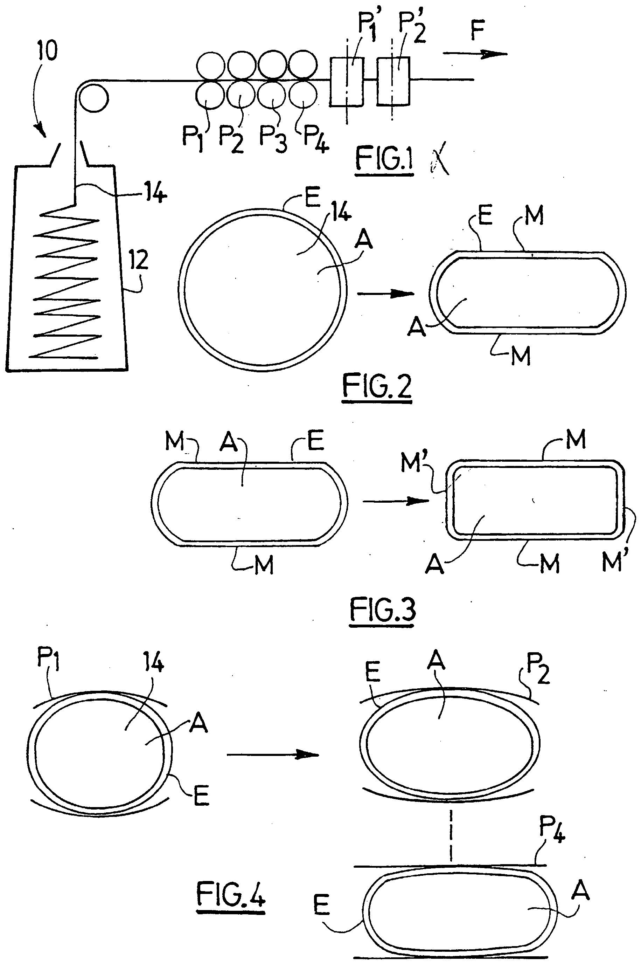

Sur la figure 1, on a représenté un dispositif permettant de fabriquer un fil pourvu de méplats longitudinaux, désigné par la référence numérique générale 10.

Le fil est réalisé à partir d'un fil de section ronde prélevé en continu à partir d'un fût 12 d'alimentation dans lequel il est enroulé.

Le fil à méplats, ainsi réalisé, est par exemple destiné à la réalisation de bobinages pour des machines électriques tournante.

Pour la réalisation d'un tel fil, on part d'un fil de section ronde comprenant une âme centrale A en matériau électriquement conducteur, par exemple en cuivre, revêtue d'une couche de matériau isolant E, formant une enveloppe électrique isolante. Avantageusement, cette enveloppe électrique isolante et en émail.

Comme on le voit sur la figure 1, le dispositif comporte essentiellement un ensemble de rouleaux de laminage adaptés pour exercer conjointement des efforts sur le fil pour le mettre en forme et des moyens (non représentés) pour faire défiler le fil entre ces rouleaux, selon le sens désigné par la flèche F, constitués par exemple par un galet moteur.

Dans l'exemple de réalisation représenté, le fil à réaliser comporte une section en coupe transversale rectangulaire.

Ainsi, on fait passer le fil entre deux ensembles de paires de rouleaux de laminage, à savoir un premier ensemble de paires P1, P2, P3 et P4 de rouleaux de laminage, les rouleaux de chaque paire étant adaptés pour exercer conjointement des efforts longitudinaux sur des zones diamétralement opposées du fil 14 de manière à former, dans ces zones, des méplats généralement parallèles, et un deuxième ensemble de rouleaux de laminage P'1 et P'2 dont les axes s'étendent perpendiculairement aux axes du premier ensemble de rouleaux de laminage P1, P2 P3 et P4 de manière à créer des méplats latéraux perpendiculaires aux méplats créés par le premier ensemble de rouleaux.

En se référant aux figures 2 et 3, pour une portion élémentaire de fil, cette mise en forme s'effectue selon deux phases successives de mise en forme, au cours desquelles la portion de fil passe entre les deux ensembles de rouleaux de laminage, respectivement, pour la formation de méplats M et M' correspondants.

On notera que les efforts exercés pour procéder à cette mise en forme s'exercent directement sur la couche d'émail entourant le conducteur du fil 14.

Ainsi, de préférence, pour chaque ensemble de rouleaux, on utilise plusieurs paires de rouleaux exerçant chacune un effort d'écrasement suffisamment faible pour ne pas altérer la couche d'émail formant l'enveloppe électrique isolante.

Plus particulièrement, si le rapport entre la longueur et la largeur de la section transversale du fil conducteur fini est supérieur à 2, on utilise, pour chaque phase de mise en forme, plusieurs paires de rouleaux de laminage.

On notera également qu'en fonction de la forme du produit fini à réaliser, il est possible d'utiliser un seul ensemble de rouleaux.

En effet, s'il convient simplement de réaliser deux méplats diamétralement opposés sur le fil, on utilise un unique ensemble d'une ou de plusieurs paires de rouleaux exerçant conjointement des efforts sur deux zones diamétralement opposées du fil de manière à créer deux méplats longitudinaux diamétralement opposés.

En se référant enfin à la figure 4, dans le cas où la configuration du fil fini nécessite d'utiliser, pour chaque phase de mise en forme, plusieurs paires de rouleaux placées en série, de l'amont vers l'aval, en considérant le sens de défilement du fil, on utilise, de préférence, en ce qui concerne les rouleaux amont, des rouleaux de laminage dont la surface périphérique externe active, c'est à dire la surface par laquelle les efforts sont exercés sur le fil, est de forme concave, les rouleaux aval ayant quant à eux une surface active plane.

On réduit alors considérablement le niveau de contrainte appliqué sur la couche d'émail d'isolation.

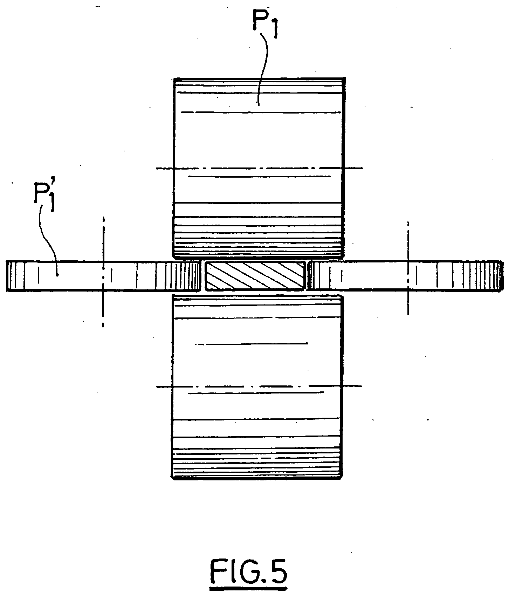

La figure 5 illustre un autre mode de réalisation du dispositif de fabrication d'un fil de section transversale rectangulaire à partir d'un fil de section rond. Dans le cas de la figure 5, la forme rectangulaire finale est obtenue directement en disposant les deux paires de rouleaux par exemple P1, P1' selon la figure 1 dont les axes de rotation sont perpendiculaires de façon que les axes se trouvent dans un même plan perpendiculaire au sens de défilement du fil, c'est-à-dire on agit simultanément dans la direction de l'épaisseur et la direction de la largeur. Les rouleaux P1 réalisant l'aplatissement en épaisseur sont motorisés pour permettre l'avancement du fil en cours de fabrication. Par contre les rouleaux P1' réalisant la déformation en largeur peuvent être non motorisés. Le dispositif ainsi décrit dans le mode de mode de réalisation de la figure 5 présente l'avantage de permettre l'obtention, à partir d'un fil rond comportant une enveloppe isolante, d'un fil de section transversale rectangulaire dont méplats M et M' forment des angles droits. Ces angles droits sont obtenus par le fait que les paires de rouleaux agissent simultanément sur les quatre faces formant méplats M, M' évitant ainsi toute torsion du fil qui pourrait intervenir dans le cas où les méplats latéraux seraient obtenus par le deuxième ensemble de rouleaux P'1, P'2 agissant après que le premier ensemble de rouleaux de laminage P1, P2 P3 et P4 ait réalisé les méplats de grande largeur. Ce mode de réalisation offre aussi l'avantage de fournir un dispositif de fabrication d'un fil très compact car les axes des deux ensembles de rouleaux P1, P2 ... et P'1, P'2 sont dans un même plan.

Les rouleaux P1 s'étendent axialement de part et d'autre du fil d'une distance au moins égale à l'épaisseur du fil. Les rouleaux P1' s'étendent entre les rouleaux P1.

De façon générale, concernant les diamètres des rouleaux, il est avantageux de donner aux rouleaux P1, P2..., qui agissent dans le sens de l'épaisseur un diamètre au moins soixante fois de l'épaisseur du fil aplati et aux rouleaux P1', P2'... qui agissent dans le sens de la largeur un diamètre supérieur à trente fois la largeur du fil aplati. L'utilisation de rouleaux de grand diamètre est avantageuse parce qu'elle permet de réduire la vitesse de rotation des rouleaux et ainsi d'obtenir un échauffement moindre et une diminution de l'usure. En effet, les efforts sont répartis sur une surface plus grande. Un autre avantage réside dans le fait que la déformation est plus progressive et donc moins brutale pour le revêtement en émail.

Avantageusement, l'invention s'applique à des alternateurs ou alternateur-démarreurs pour véhicules automobiles comprenant un stator, un rotor à griffes à N paires de pôles disposé à l'intérieur du stator et portant une bobine d'excitation dotée d'un fil d'entrée et d'un fil de sortie, le stator comprenant un corps cylindrique, plusieurs phases formées chacune par une pluralité d'éléments électriquement conducteurs montés en série le long de la périphérie du stator entre une entrée et une sortie, le corps cylindrique comprenant dans sa face radialement interne des encoches radiales de réception d'au moins quatre éléments conducteurs de phase qui sont juxtaposés dans l'encoche dans la direction radiale pour former au moins quatre couches d'éléments conducteurs, chaque élément conducteur présentant la forme d'une épingle s'étendant entre deux encoches et comportant une première branche qui est placée dans une encoche dans une couche prédéterminée et une seconde branche disposée dans une autre encoche dans une couche prédéterminée et, entre les deux branches, sur un côté axial du corps du stator, une tête formant un U vu dans la direction périphérique, tandis que sur l'autre côté du corps une extrémité libre d'une branche d'un élément conducteur est électriquement connectée à une extrémité libre d'une branche d'un autre élément conducteur, la moitié des éléments conducteurs engagés par leurs premières branches dans une encoche étant engagés par leurs deuxièmes branches respectives dans une même autre encoche en formant chacun entre les deux encoches les dits U.

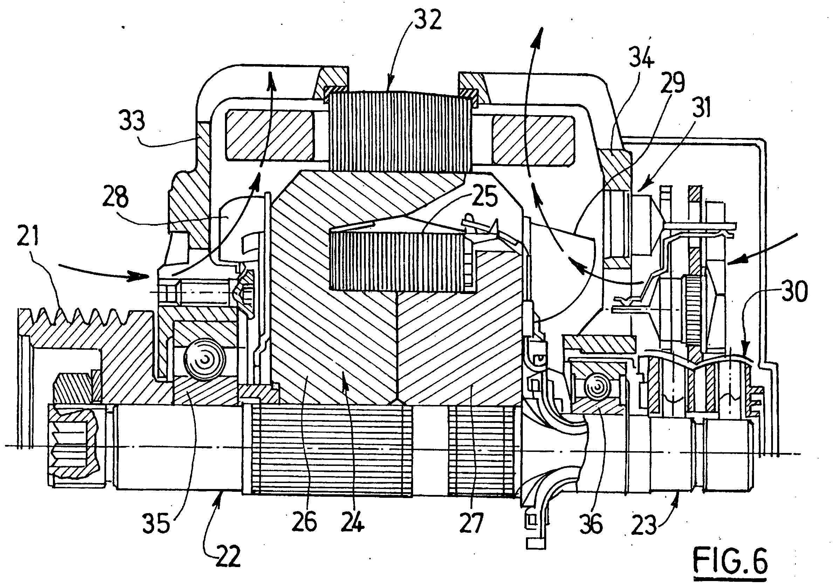

A titre d'exemple, la figure 6 montre la structure générale d'un alternateur pour véhicule automobile. L'alternateur comporte, en allant de gauche à droite de la figure 6, c'est-à-dire d'avant en arrière, une poulie d'entraînement 21 solidaire de l'extrémité avant d'un arbre 22, dont l'extrémité arrière porte des bagues collectrices (non référencées) appartenant à un collecteur 23. L'axe de l'arbre 22 constitue l'axe de rotation de la machine.

Centralement l'arbre 22 porte à fixation le rotor 24 doté d'un bobinage d'excitation 25, dont les extrémités sont reliées par des liaisons au collecteur 23. Le rotor 4 est ici un rotor à griffes de type Lundell et comporte donc deux roues polaires avant et arrière 26, 27 portants chacune respectivement un ventilateur avant 28 et arrière 29. Chaque roue 26, 27 comporte une flasque perpendiculaire à l'axe de l'arbre 22. A la périphérie externe des flasques sont ménagées de matière des dents s'étendant axialement. Les dents ont une forme trapézoïdale et sont dotées de chanfreins. Les dents de l'une des roues sont dirigées vers l'autre roue en étant décalées angulairement par rapport aux dents de cette autre roue. Lorsque le bobinage 25 est activé le rotor 24 est magnétisé et il définit ainsi des paires de pôles magnétiques, chaque roue polaire comportant alors respectivement N pôles Nord et N pôles Sud constitués par les dents.

Le régulateur est relié à un dispositif de redressement de courant 31, tel qu'un pont de diodes (dont deux sont visibles à la figure 6) lui-même relié aux sorties des phases dotées d'enroulements, que comporte le stator 32 de l'alternateur.

Ces ventilateurs 28, 29 s'étendent au voisinage respectivement d'un palier avant 33 et d'un palier arrière 34. Les paliers 33, 34 sont ajourés pour une ventilation interne de l'alternateur par l'intermédiaire des ventilateurs 28, 29 lorsque l'ensemble ventilateurs 28, 29 - rotor 24 - arbre 22 est entraîné en rotation par la poulie 21 reliée au moteur du véhicule automobile par un dispositif de transmission comportant au moins une courroie en prise avec la poulie 21. Cette ventilation permet de refroidir les enroulements du stator 32 et le bobinage 25 ainsi que le porte-balais 30 avec son générateur et le dispositif de redressement 31. On a représenté par des flèches à la figure 6 le trajet suivi par le fluide de refroidissement, ici de l'air, à travers les différentes ouvertures des paliers 33, 34 et à l'intérieur de la machine.

Ce dispositif 31, le porte-balais 30, ainsi qu'un capot de protection ajouré (non référencé) sont portés à fixation par le palier 34 en sorte que le ventilateur arrière 29 est plus puissant que le ventilateur avant 28. De manière connue, les paliers 33, 34 sont reliés entre eux, ici à l'aide de vis ou en variante de tirants non visibles, pour former un carter ou support destiné à être monté sur une partie fixe du véhicule.

Les paliers 33, 34 portent chacun centralement un roulement à billes 35, 36 pour supporter à rotation les extrémités avant et arrière de l'arbre 2 traversant les paliers pour porter la poulie 1 et les bagues du collecteur 3.

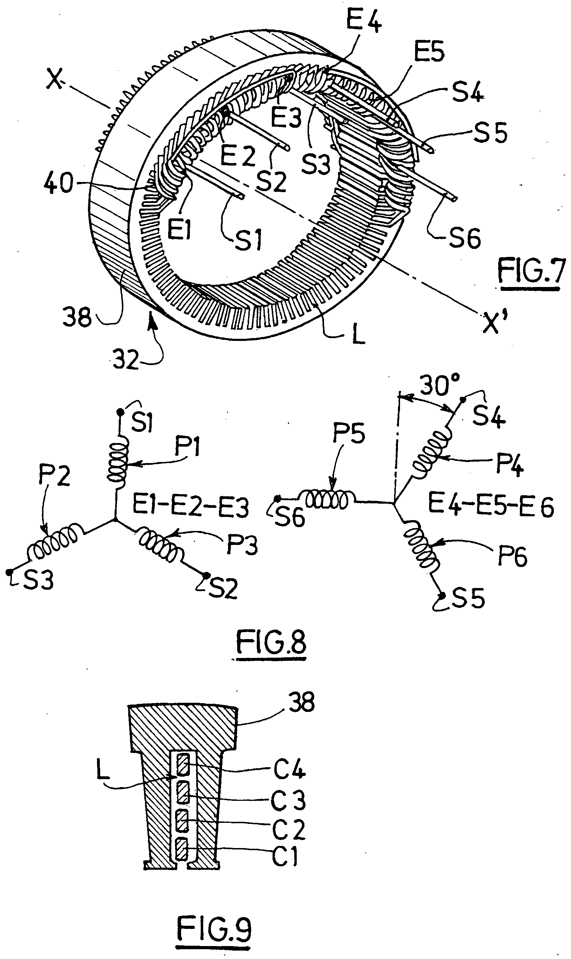

Les figures 7 et 8 représentent le stator 32 comprenant un corps cylindrique 38 d'axe X-X' et deux séries de trois phases P1 à P3 et P4 à P6 constituant deux séries de bobinage triphasé décalés de 30° électrique et se comportant comme un bobinage hexaphasé vu du coté du dispositif de redressement. Par hexaphasé il faut comprendre deux séries de bobinage triphasé décalés de 30° électrique, chaque bobinage triphasé bobiné en étoile ayant un point neutre indépendant.

Chaque phase P1 à P6 est formée chacune par une pluralité d'éléments électriquement conducteurs 40 montés en série le long de la périphérie du stator 32 entre une entrée, respectivement E1 à E6, et une sortie, respectivement S1 à S6, pour former au moins un enroulement de phase par encoche radiale L comme le montre la figure 9.

Ainsi, comme le montre la figure 9, le corps cylindrique 38, appelé aussi paquet de tôles, comprend dans sa face radialement interne des encoches radiales L de réception d'au moins quatre éléments conducteurs de phase 40. Les éléments conducteurs 40 sont juxtaposés dans l'encoche L dans la direction radiale pour former au moins quatre couches d'éléments conducteurs C1 à C4, par ordre d'éloignement croissant de la face radiale interne du corps, comme le montre la figure 8 dans le cas d'encoches à 4 éléments conducteurs.

Avantageusement, les éléments conducteurs C1 à C4 sont réalisé conformément au procédé décrit selon l'invention. Ainsi, la forme essentiellement rectangulaire des éléments conducteurs C1 à C4 est obtenue en prélevant en continu le fil conducteur rond à partir d'un support d'alimentation 12, et en appliquant longitudinalement des efforts sur le fil, dans la direction de l'épaisseur, sur des zones diamétralement opposées de manière à former des méplats M longitudinaux sur ce dernier, le fil rond 14 étant muni d'une enveloppe électriquement isolante, les efforts sont appliqués sur le fil par l'intermédiaire de ladite enveloppe. Puis, postérieurement ou simultanément à l'étape d'application desdits efforts, on applique des efforts additionnels sur des zones diamétralement opposées du fil, perpendiculaires aux méplats formés, dans la direction de la largeur du fil, de manière à former un fil de section en coupe transversale essentiellement rectangulaire.

## Revendications

1. Procédé de fabrication d'un fil électriquement conducteur pour bobinage pour machine électrique tournante, à partir d'un fil conducteur (14) de section en coupe transversale de forme généralement ronde, **caractérisé en ce qu'**il comporte les étapes consistant à :
- prélever en continu le fil conducteur rond à partir d'un support d'alimentation (12), et
- appliquer longitudinalement des efforts sur le fil sur des zones diamétralement opposées de manière à former des méplats (M, M') longitudinaux sur ce dernier,
et **en ce que** le fil rond (14) étant muni d'une enveloppe électriquement isolante, les efforts sont appliqués sur le fil par l'intermédiaire de ladite enveloppe.

2. Procédé selon la revendication 1, **caractérisé en ce que** postérieurement à l'étape d'application desdits efforts dans la direction de la l'épaisseur du fil, on applique des efforts additionnels, dans la direction de la largeur du fil, sur des zones diamétralement opposées perpendiculaires aux méplats formés, de manière à former un fil de section en coupe transversale généralement rectangulaire.

3. Procédé selon la revendication 1, **caractérisé en ce qu'**on applique des efforts additionnels sur des zones diamétralement opposées du fil dans la direction de la largeur du fil simultanément avec les efforts appliqués longitudinalement dans la direction de l'épaisseur du fil, de manière à former un fil de section en coupe transversale rectangulaire, les méplats (M, M') contigus formant des angles droits.

4. Procédé selon l'une quelconque des revendications 1 à 3, **caractérisé en ce que** lesdites étapes d'application desdits efforts consistent chacune à faire passer le fil entre au moins une paire de rouleaux de laminage (P1, P2, P3, P4 ; P'1, P'2).

5. Procédé selon la revendication 4, dépendante de la revendication 2 ou 3, **caractérisé en ce que** le rapport entre la longueur et la largeur de la section du fil étant inférieur ou égal à deux, lesdites étapes d'application desdits efforts dans la direction de l'épaisseur et de la largeur du fil consistent chacune à faire passer le fil entre une seule paire de rouleaux de laminage.

6. Dispositif de fabrication d'un fil électriquement conducteur pour bobinage pour machine électrique tournante selon le procédé d'une des revendications précédentes, à partir d'un fil conducteur (14) de section en coupe transversale de forme généralement ronde, **caractérisé en ce que** ledit fil étant pourvu d'une enveloppe (E) électriquement isolante, le dispositif comporte un fût (12) d'alimentation dans lequel ledit fil est enroulé et au moins une paire de rouleaux de laminage (P1, P2, P3, P4 ; P'1, P'2) adaptés pour appliquer conjointement des efforts sur ledit fil par l'intermédiaire de ladite enveloppe (E) sur des zones diamétralement opposées de manière à former des méplats sur ce dernier, et des moyens pour faire défiler le fil entre lesdits rouleaux.

7. Dispositif selon la revendication 6, **caractérisé en ce qu'**il comporte au moins deux paires de rouleaux de laminage (P1, P2, P3, P4 ; P'1, P'2) disposées respectivement en amont et en aval, en considérant le sens de défilement du fil, la paire de rouleaux amont comportant une surface périphérique active concave.

8. Dispositif selon la revendication 6, **caractérisé en ce qu'**il comporte au moins deux paires de rouleaux de laminage (P1, P1') dont les axes de rotation sont perpendiculaires, qui sont disposés de façon que les axes soient placés dans un même plan perpendiculaire au sens du défilement du fil.

9. Dispositif selon la revendication 6, **caractérisé en ce que** les paires de rouleaux (P'1,P'2) agissant dans la direction de la largeur du fil s'étendent entre les paires de rouleaux (P1,P2) agissant dans la direction de l'épaisseur du fil.

10. Dispositif selon l'une des revendications 6 à 9, **caractérisé en ce que** les rouleaux (P1, P2, P3, P4) agissant dans la direction de l'épaisseur du fil aplati ont un diamètre supérieur à soixante fois l'épaisseur du fil aplati.

11. Dispositif selon l'une des revendications 6 à 10, **caractérisé en ce que** les rouleaux (P1', P2', P3', P4') agissant dans la direction de la largeur du fil aplati ont un diamètre supérieur à trente fois la largeur du fil aplati.

12. Dispositif selon l'une des revendications 6 à 10, **caractérisé en ce que** les rouleaux (P1, P2, P3, P4) agissant dans la direction de l'épaisseur du fil aplati sont motorisés pour permettre l'avancement du fil en cours de fabrication.

## Patentansprüche

1. Verfahren zur Herstellung eines elektrisch leitenden Drahtes für eine Wicklung für eine rotierende elektrische Maschine aus einem leitenden Draht (14) mit einem Querschnitt von im Wesentlichen runder Form, **dadurch gekennzeichnet, dass** es die folgenden Schritte umfasst:
- kontinuierliches Entnehmen des runden leitenden Drahtes von einer Zuführungshalterung (12), und
- Ausüben von Kräften in Längsrichtung auf den Draht auf einander diametral gegenüberliegenden Bereichen, um längs verlaufende Abflachungen (M, M') auf diesem Letzteren auszubilden,
und dadurch, dass, wenn der runde Draht (14) mit einer elektrisch isolierenden Hülle ausgestattet ist, die Kräfte auf den Draht über diese Hülle ausgeübt werden.

2. Verfahren nach Anspruch 1, **dadurch gekennzeichnet, dass** nach dem Schritt der Ausübung der Kräfte in der Richtung der Dicke des Drahtes zusätzliche Kräfte in der Richtung der Breite des Drahtes auf einander diametral gegenüberliegenden Bereichen, die zu den ausgebildeten Abflachungen senkrecht sind, ausgeübt werden, um einen Draht mit im Wesentlichen rechteckigem Querschnitt auszubilden.

3. Verfahren nach Anspruch 1, **dadurch gekennzeichnet, dass** zusätzliche Kräfte auf einander diametral gegenüberliegenden Bereichen des Drahtes in der Richtung der Breite des Drahtes gleichzeitig mit den Kräften ausgeübt werden, die in Längsrichtung in der Richtung der Dicke des Drahtes ausgeübt werden, um einen Draht mit rechteckigem Querschnitt auszubilden, wobei die aneinander angrenzenden Abflachungen (M, M') rechte Winkel bilden.

4. Verfahren nach einem der Ansprüche 1 bis 3, **dadurch gekennzeichnet, dass** die Schritte der Ausübung der Kräfte jeweils darin bestehen, den Draht zwischen wenigstens einem Paar von Walzrollen (P1, P2, P3, P4; P'1, P'2) durchlaufen zu lassen.

5. Verfahren nach Anspruch 4, wenn abhängig von Anspruch 2 oder 3, **dadurch gekennzeichnet, dass** das Verhältnis zwischen der Länge und der Breite des Querschnitts des Drahtes kleiner oder gleich zwei ist, wobei die Schritte der Ausübung der Kräfte in der Richtung der Dicke und der Breite des Drahtes jeweils darin bestehen, den Draht zwischen einem einzigen Paar von Walzrollen durchlaufen zu lassen.

6. Vorrichtung zur Herstellung eines elektrisch leitenden Drahtes für eine Wicklung für eine rotierende elektrische Maschine gemäß dem Verfahren nach einem der vorhergehenden Ansprüche aus einem leitenden Draht (14) mit einem Querschnitt von im Wesentlichen runder Form, **dadurch gekennzeichnet, dass**, wenn der Draht mit einer elektrisch isolierenden Hülle (E) versehen ist, die Vorrichtung einen Fasswickler (12) zur Speisung, auf dem der Draht aufgewickelt ist, und wenigstens ein Paar Walzrollen (P1, P2, P3, P4; P'1, P'2), die dafür ausgelegt sind, zusammen über die Hülle (E) Kräfte auf den Draht auf einander diametral gegenüberliegenden Bereichen auszuüben, um Abflachungen auf diesem Letzteren auszubilden, und Mittel, um den Draht zwischen den Rollen durchlaufen zu lassen, aufweist.

7. Vorrichtung nach Anspruch 6, **dadurch gekennzeichnet, dass** sie wenigstens zwei Paare von Walzrollen (P1, P2, P3, P4; P'1, P'2) aufweist, die, in der Durchlaufrichtung des Drahtes gesehen, vorn und hinten angeordnet sind, wobei das vordere Rollenpaar eine konkave aktive Umfangsfläche aufweist.

8. Vorrichtung nach Anspruch 6, **dadurch gekennzeichnet, dass** sie wenigstens zwei Paare von Walzrollen (P1, P'1) aufweist, deren Drehachsen zueinander senkrecht sind, und welche derart angeordnet sind, dass die Achsen in ein und derselben Ebene liegen, die zu der Durchlaufrichtung des Drahtes senkrecht ist.

9. Vorrichtung nach Anspruch 6, **dadurch gekennzeichnet, dass** die Paare von Rollen (P'1, P'2), die in der Richtung der Breite des Drahtes wirken, sich zwischen den Paaren von Rollen (P1, P2) erstrecken, die in der Richtung der Dicke des Drahtes wirken.

10. Vorrichtung nach einem der Ansprüche 6 bis 9, **dadurch gekennzeichnet, dass** die Rollen (P1, P2, P3, P4), die in der Richtung der Dicke des abgeflachten Drahtes wirken, einen Durchmesser aufweisen, der größer als das Sechzigfache der Dicke des abgeflachten Drahtes ist.

11. Vorrichtung nach einem der Ansprüche 6 bis 9, **dadurch gekennzeichnet, dass** die Rollen (P1', P2', P3', P4'), die in der Richtung der Breite des abgeflachten Drahtes wirken, einen Durchmesser aufweisen, der größer als das Dreißigfache der Breite des abgeflachten Drahtes ist.

12. Vorrichtung nach einem der Ansprüche 6 bis 10, **dadurch gekennzeichnet, dass** die Rollen (P1, P2, P3, P4), die in der Richtung der Dicke des abgeflachten Drahtes wirken, motorisch angetrieben sind, um die Vorwärtsbewegung des Drahtes, welcher hergestellt wird, zu ermöglichen.

## Claims

1. Method for manufacturing an electrically conductive wire for winding for a rotating electrical machine, from a conductive wire (14) of generally round section in cross section, **characterized in that** it comprises the steps consisting in:
- continuously taking up the round conductive wire from a feed support (12), and
- longitudinally applying forces to the wire on diametrically opposite zones so as to form longitudinal flaps (M, M') thereon,
and **in that**, the round wire (14) being provided with an electrically insulating jacket, the forces are applied to the wire via said jacket.

2. Method according to Claim 1, **characterized in that**, after the step of application of said forces in the thickness direction of the wire, additional forces are applied, in the widthwise direction of the wire, to diametrically opposite zones at right angles to the flaps formed, so as to form a wire of generally rectangular section in cross section.

3. Method according to Claim 1, **characterized in that** additional forces are applied to diametrically opposite zones of the wire in the widthwise direction of the wire simultaneously with the forces applied longitudinally in the thickness direction of the wire, so as form a wire of rectangular section in cross section, the contiguous flaps (M, M') forming right angles.

4. Method according to one of Claims 1 to 3, **characterized in that** said steps of application of said forces each consist in passing the wire between at least one pair of nip rolls (P1, P2, P3, P4; P'1, P'2).

5. Method according to Claim 4, dependent on Claim 2 or 3, **characterized in that**, the ratio between the length and the width of the section of the wire being less than or equal to 2, said steps of application of said forces in the thickness direction and the widthwise direction of the wire each consist in passing the wire between a single pair of nip rolls.

6. Device for manufacturing an electrically conductive wire for winding for a rotating electrical machine according to the method of one of the preceding claims, from a conductive wire (14) of generally round section in cross section, **characterized in that**, said wire being provided with an electrically insulating jacket (E), the device comprises a feed drum (12) in which said wire is wound and at least one pair of nip rolls (P1, P2, P3, P4; P'1, P'2) suitable for jointly applying forces to said wire via said jacket (E) on diametrically opposite zones so as to form flats thereon, and means for feeding the wire between said rolls.

7. Device according to Claim 6, **characterized in that** it comprises at least two pairs of nip rolls (P1, P2, P3, P4; P'1, P'2) arranged respectively upstream and downstream, considering the direction of feed of the wire, the pair of rolls upstream comprising a concave active peripheral surface.

8. Device according to Claim 6, **characterized in that** it comprises at least two pairs of nip rolls (P1, P'1) whose axes of rotation are at right angles, which are arranged so that the axes are placed in a same plane at right angles to the direction of feed of the wire.

9. Device according to Claim 6, **characterized in that** the pairs of rolls (P'1, P'2) acting in the widthwise direction of the wire extend between the pairs of rolls (P1, P2) acting in the thickness direction of the wire.

10. Device according to one of Claims 6 to 9, **characterized in that** the rolls (P1, P2, P3, P4) acting in the thickness direction of the flattened wire have a diameter greater than sixty times the thickness of the flattened wire.

11. Device according to one of Claims 6 to 10, **characterized in that** the rolls (P1', P2', P3', P4') acting in the widthwise direction of the flattened wire have a diameter greater than thirty times the width of the flattened wire.

12. Device according to one of Claims 6 to 10, **characterized in that** the rolls (P1, P2, P3, P4) acting in the thickness direction of the flattened wire are motorized to allow the advancing of the wire during manufacture.
